# EUROPEAN PATENT APPLICATION

(11) **EP 0 868 040 A2**
(43) Date of publication of application: **30.09.1998**
(21) Application number: 98302219.5
(22) Date of filing: 24.03.1998
(51) Int. Cl.: H04H 1/00, G06F 17/22, G06F 17/60

(54) **System and method for providing electronic mail via a satellite broadcast system receiver**

(30) Priority: 25.03.1997 US 824198
(71) Applicant: SONY ELECTRONICS INC., Park Ridge, New Jersey 07656 (US)
(72) Inventor: Ozaki, Arthur H., Escondido, California 92025 (US)
(74) Representative: Molyneaux, Martyn William

(57) **Abstract**

An E-mail access capability is provided for the Direct Satellite System (DSS) products without incurring significant costs. A keyboard provides data entry by the user. A modem provides communication with a service provider through a telephone line. An E-mail access structure is incorporated inside the Integrated Receiver/Decoder. The E-mail Access structure includes a user's interface module, a terminal emulation module and a modem control module. The E-mail Access structure provides the user a menu-driven E-mail Access session.

## Description

### BACKGROUND OF THE INVENTION

### 1. Field of the Invention

This invention relates to the provision of electronic mail access using an existing satellite broadcast receiver.

### 2. Description of Related Art

Direct Broadcast Satellite (DBS), or Direct Satellite Systems (DSS), such as the DSS products manufactured by SONY Corporation, have become quite popular for home use. In addition to the satellite dish, the receiver includes a modem that is connected to the user's telephone line. This enables the user to order pay-per-view programs using an on-screen menu generated by the receiver.

For example, DirecTV™, a unit of GM Hughes Electronics, provides subscribers a setup box to relay the order from an on-screen menu. The setup box uses the store-and-forward technique which stores a customer's PPV order and periodically call the operator's billing center to report activity. Digital setup boxes typically contain the following components: an embedded Central Processing Unit (CPU) such as a Motorola 68K or PowerPC, Random Access Memory (RAM), a display chip, a 1-GHz Radio Frequency (RF) tuner, a demodulator, an error-correction chip, an MPEG audio/video decoder, two 16-bit audio Digital-to-Analog (D-to-A) converters, an NTSC encoder, an RF modulator, an infrared interface for remote control, Read-Only-Memory (ROM) for the operating system, a security device to prevent theft of service, a modem and a switching power supply.

One application of the Internet is electronic mail (e-mail). E-mail has become a widely used communications technique. Each user has a unique e-mail address and can be reached by anyone else with e-mail access to the Internet. One popular medium for usage of the E-mail has expanded to include non-technically oriented users.

Electronic mail is a low bandwidth, text-based application. It is a store and forward service, meaning that it does not require communicating users to have an end-to-end communications path set up at the time the message is sent. The message is forwarded and stored on subsequent computers until it reaches the recipient.

Although E-mail access is traditionally achieved through a personal computer, it is not necessary to use a general-purpose computer system for this purpose. A terminal with appropriate software can provide E-mail access using the television set for displaying and a telephone line for modem access. Examples are the WebTV™ Internet Terminals from SONY and Phillips. Users connect the Internet Terminal to the television set and subscribe the WebTV Network to receive the E-mail on-line service for a monthly fee. These terminals, however, do not provide direct satellite broadcast services.

Owners of direct broadcast satellite receivers can connect an E-mail terminal described above to their television set. However, this arrangement is costly and cumbersome.

It is therefore desirable to extend the capability of existing DSS products to include E-mail access without retooling the current direct broadcast satellite receivers significantly.

### SUMMARY OF THE INVENTION

A method and system for extending the capability of the existing direct broadcast satellite receivers for electronic mail (e-mail) access. In one embodiment, the subsystem includes a keyboard for data entry, a modem, an e-mail access program to be executed by the microprocessor inside the integrated receiver/decoder in the receiver. Using the receiver of the present invention, a user not only can receive satellite broadcast programming but also can have e-mail access simply by subscribing to a service provider.

The e-mail access program executed by the subsystem allows the user to switch between the direct satellite broadcast (DSB) programs and e-mail access session, set up the modem and the display, and dial the e-mail access number. In one embodiment, the e-mail access program is modular and includes a User's Interface Module, a Terminal Emulation Module, and a Modem Control Module.

The User's Interface Module receives the data entry from the keyboard, provides a main menu of user options on the display monitor, and links to the Terminal Emulation Module. The Terminal Emulation Module emulates the integrated receiver/decoder as a terminal for communication with the host computer at the service provider. The Modem Control Module allows the Integrated Receiver/Decoder (IRD) processor to control the operation of the modem to enable connection via the telephone line to the service provider.

The subsystem is a low-cost solution to provide users of DSB products a means to have e-mail access without investing additional costs for a computer system or an Internet Terminal. The e-mail access program is specially designed for the IRD platform and utilizes existing hardware and connections such that user simply subscribes to a service provider to have e-mail access.

### BRIEF DESCRIPTION OF THE DRAWINGS

The objects, features and advantages of the present invention will become apparent from the following detailed description of the present invention in which:

Figure 1 is a block diagram illustrating a Direct Satellite System incorporating the features of the present invention.

Figure 2 is a block diagram showing the structure of the Integrated Receiver/ Decoder (IRD).

Figure 3 is a high-level block diagram showing the main components of the E-mail access program.

Figure 4 is a block diagram showing the functions within the User's Interface Module.

Figures 5(a), 5(b), 5(c), and 5(d) show the exemplary menus as shown on the display monitor.

Figure 6 is a block diagram showing the functions within the Terminal Emulation Module.

Figure 7 is a block diagram showing the functions within the Modem Control Module.

Figure 8 is a flowchart illustrating a typical sequence of an E-mail access session.

### DESCRIPTION OF THE PRESENT INVENTION

The present invention discloses a method and system to provide electronic-mail (e-mail) access on existing Direct Satellite Systems (DSS) products. The system includes a keyboard for data entry, an e-mail access program executed by the processor inside the integrated receiver/decoder of the DSS. The system allows users to use existing products without additional installation costs with a simple software upgrade.

In the following description, for purposes of explanation, numerous details are set forth, such as menus, flowcharts, and modular charts, in order to provide a thorough understanding of the present invention. However, it will be apparent to one skilled in the art that these specific details are not required in order to practice the present invention. In other instances, well known electrical structures and circuits are shown in block diagram form in order not to unnecessarily obscure the present invention.

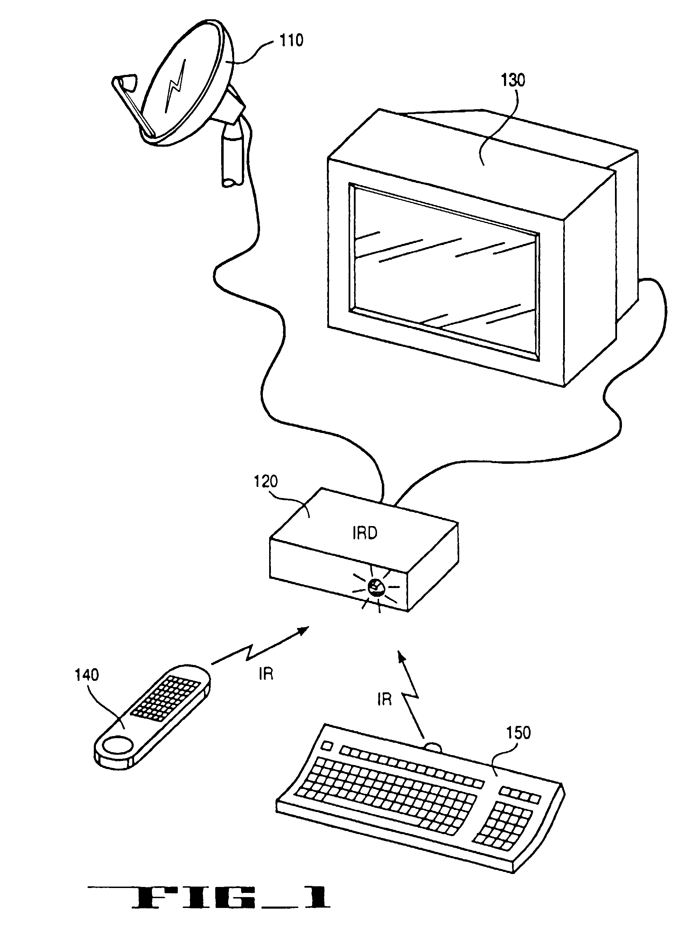

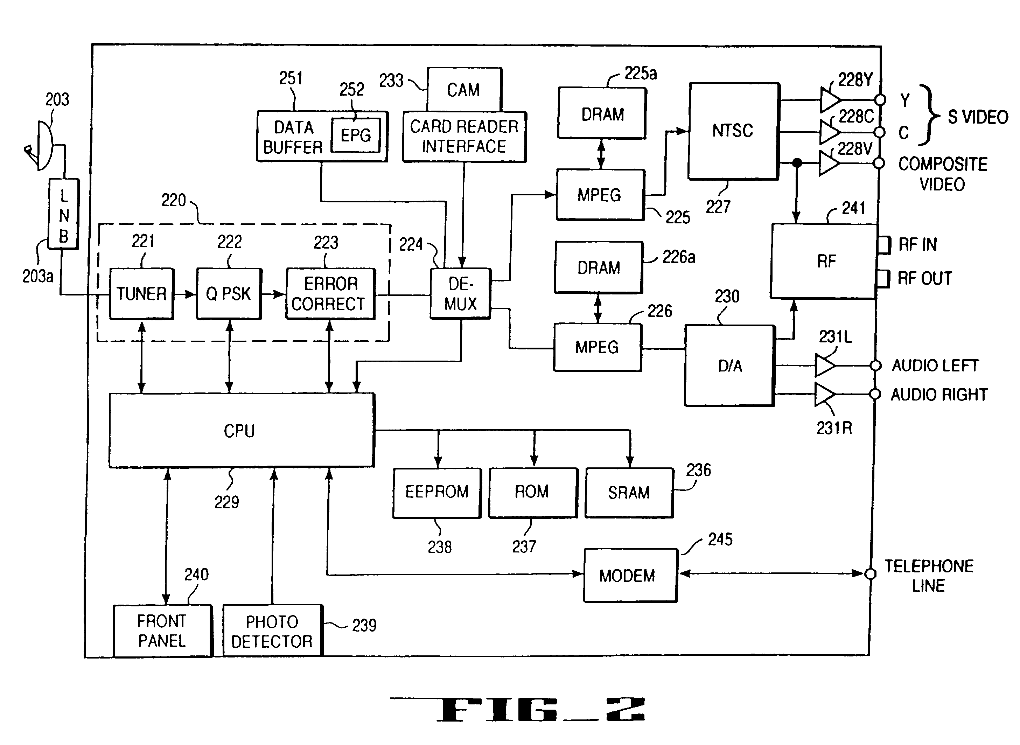

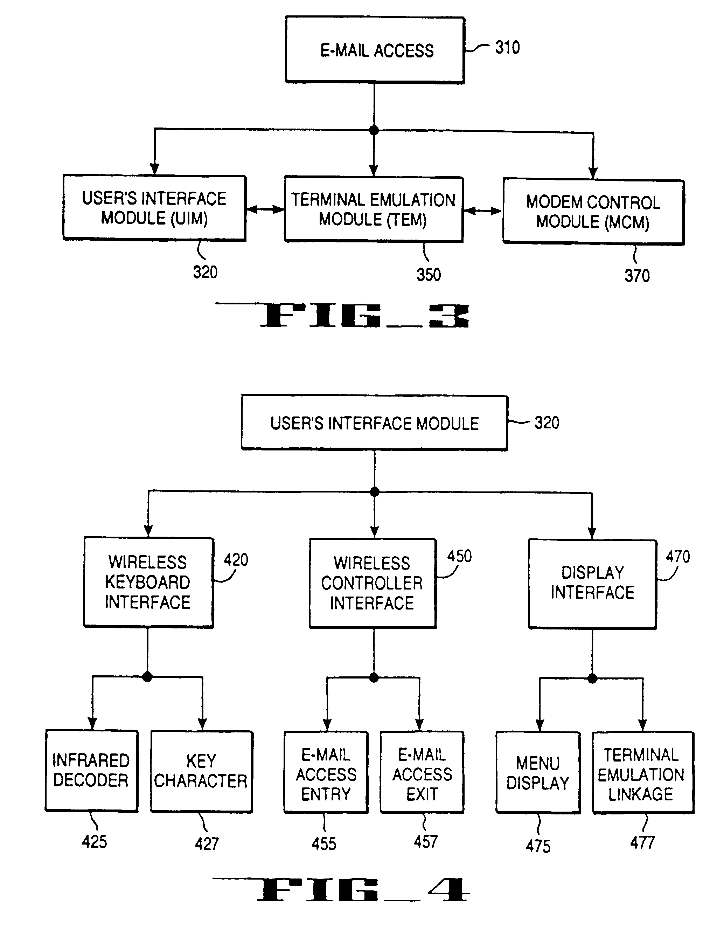

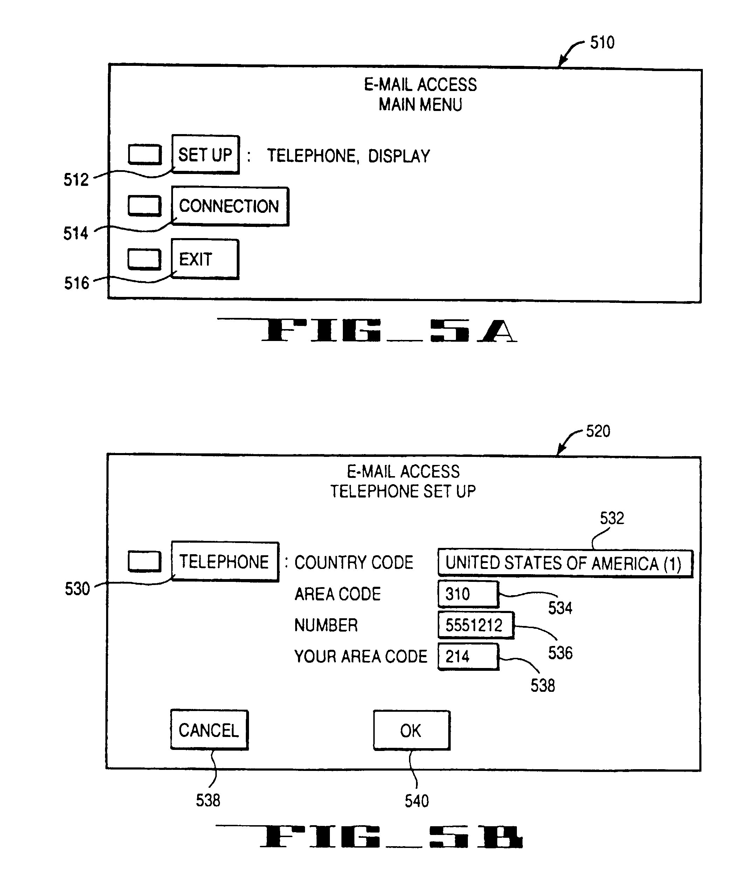

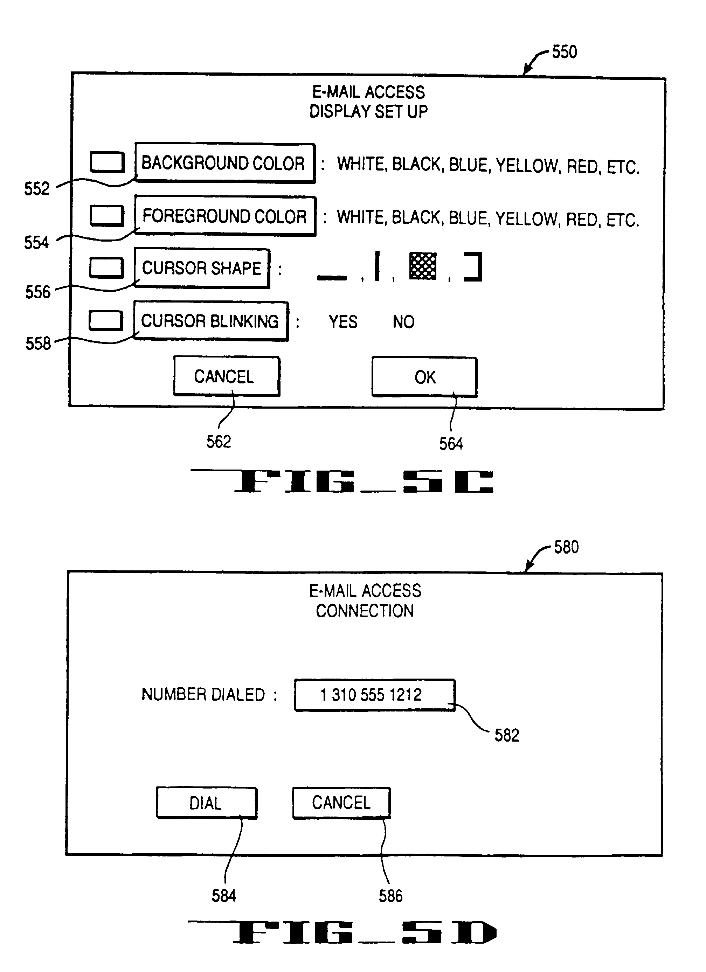

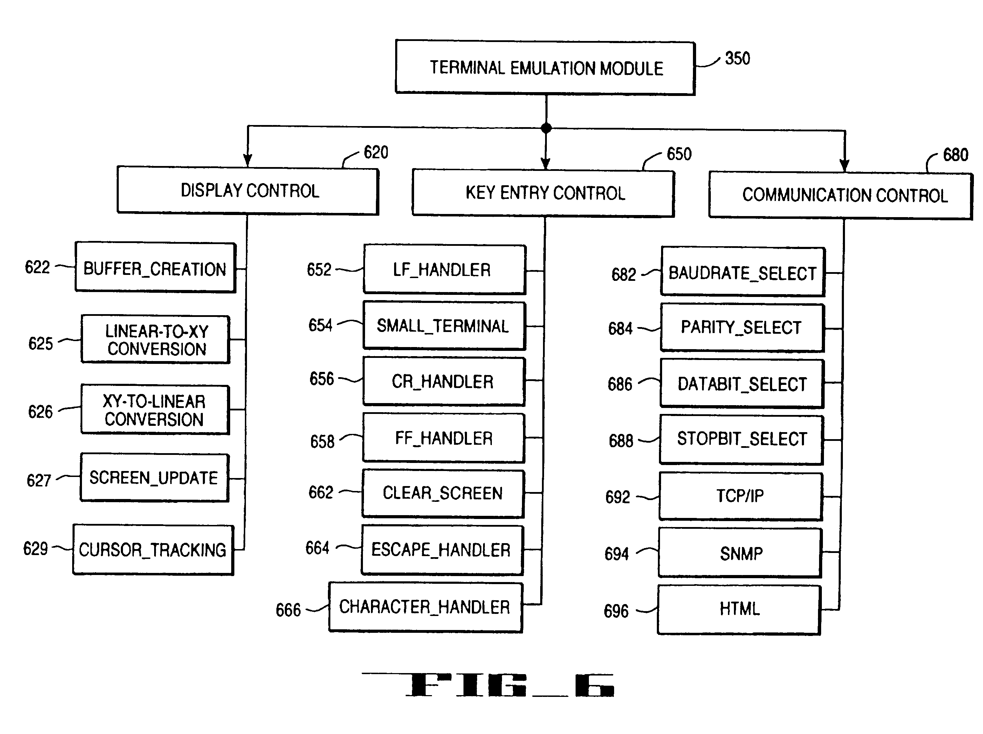

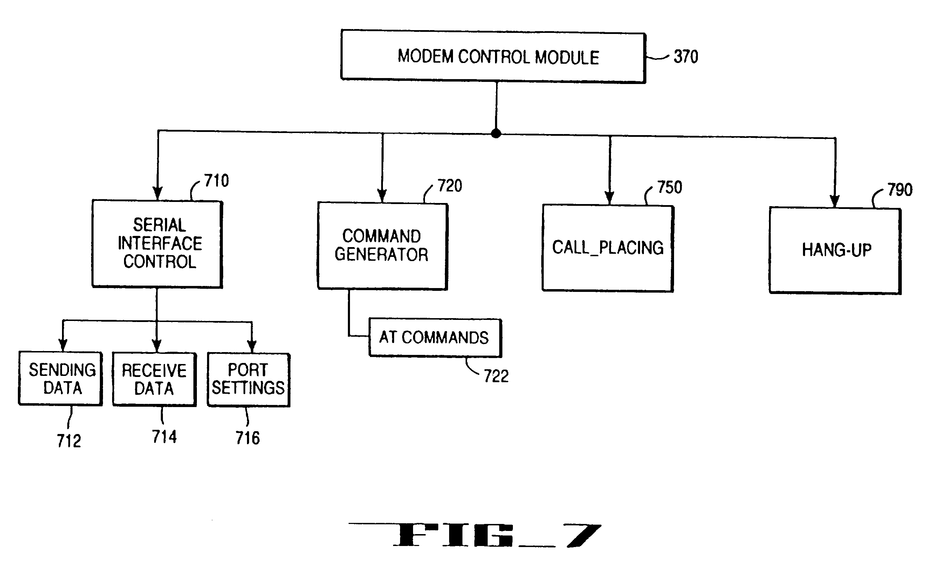

Figure 1 is a simplified diagram illustrating a Direct Satellite System (DSS) incorporating the subsystem in the present invention. The system has an antenna 110, an integrated receiver/decoder 120 (IRD), a monitor 130, a remote controller 140 and a remote keyboard 150. The packets are transmitted by a transponder on the satellite. Each transponder transmits data in a frequency division manner IRD 120 can be tuned by the viewer to the frequency of the transponder corresponding to a channel, which is designated by the viewer so that the packets of data are received by IRD 120.

Antenna 110 receives an encoded data signal sent from a satellite. The received encoded signal is decoded by the IRD 120. IRD 120 has circuitry to convert the received encoded signal into decoded video signal to be sent to monitor 130. Monitor 130 is typically a television set with circuitry to receive TV broadcast programs and video sources.

Preferably, IRD 120 is controlled by remote wireless controller 140 and remote wireless keyboard 150. Wireless Controller 140 has buttons to enable the user to select programs and to perform other control functions. Wireless Keyboard 150 provides standard computer keyboard to enable user to type mail messages. It is also noted that Wireless Keyboard 150 is only an example of data entry. Obviously, other methods of data entry such as screen keyboard or hardwired keyboard can also be used.

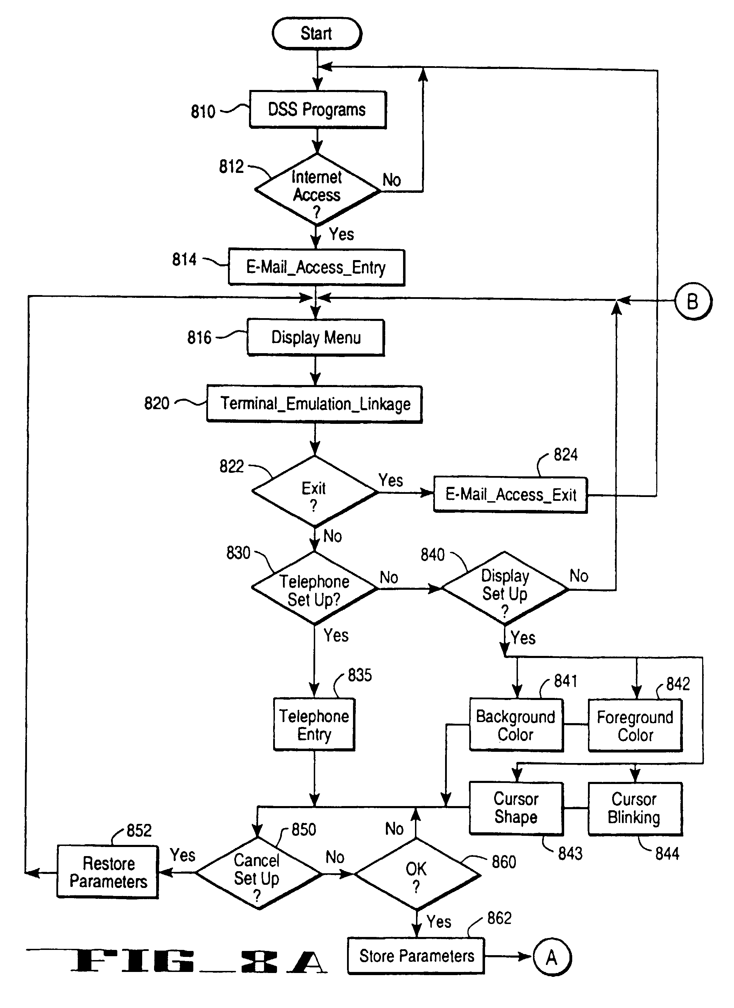

Figure 2 is a block diagram of the IRD 203. A radio frequency (RF) signal output from the Low Noise Block down converter (LNB) 203a of the antenna 203 is supplied to a tuner 221 of a front end 220. The output from the tuner 221 is supplied to a Quadrature Phase-Shift Keeping (QPSK) demodulation circuit 222 for demodulation. The output from the QPSK demodulation circuit 222 is supplied to an error correcting circuit 223 for error correction. The data is received in encrypted and encoded (i.e., compressed) form.

The transport integrated circuit (IC) 224 receives the data stream, consisting of packets of data, from the error correcting circuit 223 and directs portions of the data stream to the appropriate circuit for processing. The digital data stream sent from a satellite includes headers from classifying the different portions of the data in the digital data stream. The transport IC stores the headers in registers and uses the headers to direct the data. The data stream sent from the satellite, includes video data in the format specified by the Motion Pictures Expert Group standard (MPEG), MPEG audio data and electronic programming guide (EPG) data. Data that is identified by its header to be video data is transferred to MPEG video decoder 225. Data that is identified by its header to be audio data is transferred to MPEG audio decoder 226. Similarly, data having a header that identifies the data to be EPG data is transferred to a predetermined area in the data buffer 251 designated to store the EPG.

A conditional access module (CAM) 233, includes a Central Processing Unit (CPU), a Read Only Memory (ROM) and a Random Access Memory (RAM). The conditional access module determines whether the user has the authorization to receive certain data, e.g., audio/video for a pay TV station, using the authorization information stored in its memory. Thus, if the conditional access module determines that the user is authorized access, a key to decrypt the incoming data is provided to the transport IC 224, which decrypts the data using the key provided. In the present embodiment, a smart card is utilized. This card is inserted into the card reader interface 232 for interface to the transport IC 224. It is readily apparent to one skilled in the art that the conditional access module is not limited to smart cards and may be configured in other kinds of circuitry.

The MPEG video decoder 225 decodes the video signal received from the transport IC. DRAM 225a, connected to the MPEG video decoder 225, is used for buffering and storage of video data during processing by the MPEG video decoder. The decoded digital video signal is supplied to an NTSC encoder 227 and converted to a luminance signal (Y) and a chroma signal (C) which are respectively output through a buffer amplifier 228Y or 228C as an S video signal. A composite video signal is also output through a buffer amplifier 228V.

The MPEG audio decoder 226 decodes the digital audio signal. DRAM 226a, connected to the MPEG audio decoder 226, is used for buffering of data and information during processing by the MPEG audio decoder 226. The decoded digital audio signal is converted into an analog audio signal by D/A converter 230. The left audio signal is output through a buffer amplifier 231L and the right audio signal is output through buffer amplifier 231R.

An RF modulator 241 mixes a composite signal output form the NTSC encoder 227 with an analog audio signal output from the D/A converter 230. The RF modulator 241 converts the mixed signal into an RF signal and outputs the RF signal therefrom.

The CPU 229 is the central control mechanism and executes code stored in the ROM 237 to perform certain functions of the system. For example, the CPU executes the E-mail access program in accordance with the teachings of the present invention. In addition, the CPU receives and processes the user input, received from the front panel buttons or switches 240 and the photodetector circuit 239 to provide the user functionality and access to the system described here. In addition, the CPU accesses user settings/preferences for processing of information and configuration of the system. The user settings are stored in the non-volatile memory, such as EEPROM 238. In addition, the CPU maintains a list of pointers, stored in the SRAM 236, to the channel information and program information stored in the SRAM 251.

The modem 245 is connected to the telephone line for sending and receiving communication data. The CPU 229 controls modem 245 by sending commands. The CPU 229 also receives information from modem 245.

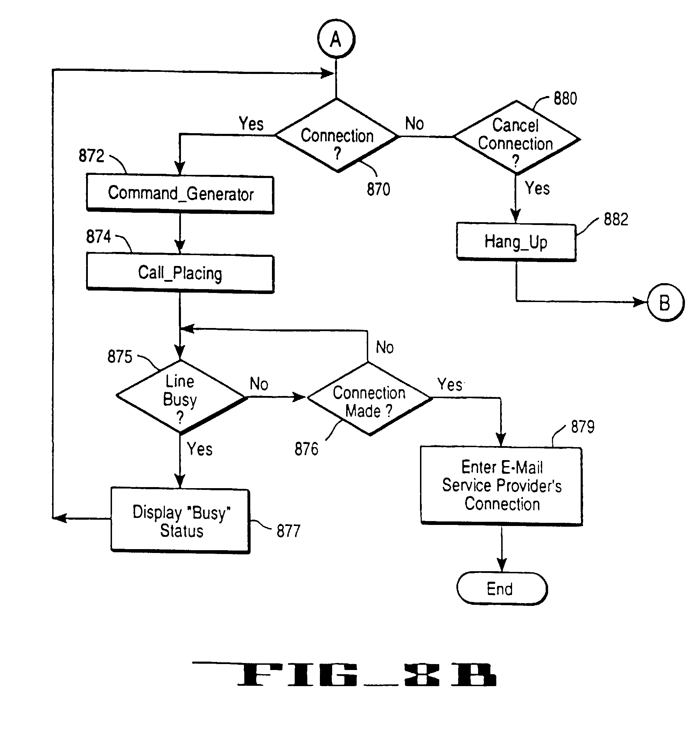

Figure 3 is a high-level block diagram showing the basic architecture for E-mail access. There are several methods to implement the basic architecture. One method is hardware. The specific functions can be realized in separate or integrated circuits with dedicated hardware structures to perform the functions. Another method is software. A program encompassing the structure is executed by the microprocessor currently inside the IRD. Yet another method is a combination of both hardware and software where some dedicated functions may be realized by hardware circuits while other functions are implemented as program codes executed by the IRD microprocessor.

The E-mail Access 310 comprises a User's Interface Module (UIM) 320, a Terminal Emulation Module (TEM) 350, and a Modem Control Module (MCM) 370. UIM 320 contains functions that accept user's entry through wireless remote controller and wireless keyboard, and displays data on the display monitor. TEM 350 contains functions that enable the IRD to emulate a terminal so that it can communicate with a host server that handles E-mail traffic MCM 370 contains functions that control a built-in or external modem for dialing the telephone number and connecting the communication stream.

In the following description, text-only E-mail access is described. However, the capability to link to graphics and/or hypertexts is inherent in the IRD due to its existing video circuitry.

User's Interface Module (UIM):
Figure 4 is a block diagram showing the functions within the UIM 320. UIM 320 consists of essentially three main functions: Wireless_Keyboard_ Interface 420, Wireless_Controller_Interface 450, and Display_Interface 470.

Wireless_Keyboard_Interface 420 accepts data entry from user through the wireless keyboard. Two basic functions in Wireless_Keyboard_Interface 420 includes Infrared_Decoder 425 and Key_Character 427. Infrared_Decoder 425 monitors the photodetector inside the IRD which intercepts the infrared light source originating from the wireless keyboard. When an encoded infrared signal is detected, Infrared_Decoder 425 decodes the signal and produces the corresponding keyboard identification code which is passed to Key_Character 427. Key_Character 427 interprets the keyboard identification code and produces a ASCII-character code that can be processed by TEM 350.

Wireless_Controller_Interface 450 contains functions that link the E-mail Access program to the existing IRD control functions. The portion of the Wireless_Controller_Interface 450 related to the control of the basic functions of the IRD is not relevant in the present invention and therefore is not further described. The relevant functions include E-mail_Access_Entry 455 and E-mail_Access_Exit 457.

E-mail_Access_Entry 455 switches the mode from DSS programs to E-mail Access. This function is invoked when the user presses a button or a button sequence on the Wireless Controller indicating that he or she desires to begin an E-mail Access session. E-mail_Access_Entry 455 stores all current parameters into appropriate storage area. For example, the user may be in the middle of a programming sequence when he or she switches to E-mail Access. All relevant parameters are stored so that upon termination of E-mail Access, they can be recalled for resuming the programming sequence. E-mail_Access_Entry 455 also initializes E-mail Access parameters such as restoring the values for keyboard, modem data, display attributes saved in the previous E-mail Access session. E-mail_Access_Entry 455 then invokes Wireless_Keyboard_Interface 420.

E-mail_Access_Exit 457 switches the mode from E-mail Access to DSS programming. Preferably, this function is invoked when the user presses a designated key on the wireless keyboard indicating the desire to end the E-mail Access session and return to the DSS programs. E-mail_Access_Exit 457 restores all parameters previously stored before entry to E-mail Access so that DSS services and programming may continue. E-mail_Access_Exit 457 also saves all the current settings and programmed values for the E-mail Access session into appropriate storage for later retrieval.

Display Interface 470 provides basic functions for displaying information during an E-mail Access session. The basic functions include Menu_Display 475 and Terminal_Emulation_Linkage 477. Menu_Display 475 displays standard menu items for user's selection. The menu provides the user a selection of a set-up mode, a dial mode, or exit. The menu may include information set in the previous E-mail Access session such as telephone number and other default parameters. Additional selections may include window size, color attributes, background and foreground colors. Terminal_Emulation_Linkage 477 exchanges information between UIM 320 and TEM 350. The Menu_Display 475 may utilize some functions within the TEM 350. Examples of these functions are key character entry, cursor control, and arrow key tracking. It should be noted that the Menu_Display 475 displays fixed menu items and accepts a fairly rigid date entry mode from the user. Therefore, the functions employed by the Menu_Display 475 are not as flexible as those in the TEM 350.

Figures 5(a) through (d) show a typical sequence of the Menus in an E-mail Access session. The user selects a menu item by pressing the up, down, left, and right arrows on the wireless keyboard. When the arrow key is pressed, the selected item is highlighted. The user presses the Enter key when he or she decides to select the highlighted item.

Figure 5(a) shows the E-mail Access Main Menu. Main Menu 510 is displayed when the user switches from the DSS program to E-mail Access. The Main Menu displays three selection items: Set-Up 512, Connection 514, and Exit 516. Set-Up 512 is selected when the user desires to set up the modem parameters and/or the display attributes such as the first time the system is used. To select the desired mode, the user moves the right arrow on the keyboard which highlights the mode. Connection 514 is selected when the user wants to enter the E-mail Access session and begins connection to the E-mail Service Provider. This mode is normally selected when the user already set up the session previously, or the user prefers to use the default set-up. Exit 516 is selected when the user wants to quit the E-mail Access session and return to the DSS program.

Figure 5(b) shows the Telephone Set-Up Menu. Telephone Set-Up 520 is displayed when the user selects Telephone in the Set-Up item in Main Menu 510. This item is selected when the user wants to enter the telephone number to be dialed. Telephone Set-Up 520 is displayed with the default parameters highlighted so that the user may skip the particular item if the default parameter is acceptable.

Telephone 530 prompts the user to enter the country code, area code, and the number to be called. In addition, the user also enters his or her area code. Country Code 532 has the default mode of the United States of America with the code 1. Other countries have other codes which need to be entered by the user. Area Code 534 receives the 3-digit area code number of the number to be dialed. Number 536 receives the 7-digit number of the number to be dialed. Other choices may include the outside line number (e.g., 8 or 9) and extension. These are not shown for clarity. Your Area Code 538 requires the user to enter his or her area code that the telephone line is hooked up to.

After all choices and numbers are entered, the user press OK 540 to return back to the Main Menu. All the choices and numbers are stored in non-volatile storage such as Electrically Erasable Programmable Read Only Memory (EEPROM) or Flash Read Only Memory (ROM) for later retrieval in the next E-mail session. Then the user may select Display Set-Up to set up the display attributes if desired. Cancel 538 is used when the user wants to cancel the set-up and returns to the original parameters. Cancel 538 also returns the user back to the Main Menu.

Figure 5(c) shows the Display Set Up Menu. Display Set-Up 550 is displayed when the user desires to set up the display attributes. These attributes include the background and foreground colors for the E-mail window on the screen, the shape of the cursor and whether or not cursor blinking is desired. The default choices are highlighted. Other choices may also be included such as the cursor blinking rate, the E-mail window size and position on the television screen. However, these choices are not shown to avoid obscuring the description. Background Color 552 provides the choice from a number of different colors. The default color for background is black. Foreground Color 554 also provides the choice from a number different colors. The default color for foreground is white. The number of available colors may be from 4 to 256. Cursor Shape 556 provides a choice of 4 different shapes. The default shape is the underscore symbol. Cursor Blinking 558 provides two choices: Yes or No. The default choice for Cursor Blinking is Yes.

After all choices for the Display Set-Up are entered, the user press OK 564 to return back to the Main Menu. All the choices are stored in non-volatile storage such as Electrically Erasable Programmable Read Only Memory (EEPROM) or Flash Read Only Memory (ROM) for later retrieval in the next E-mail session. Then the user may select any other item in the Main Menu. Cancel 562 is used when the user wants to cancel the set-up and returns to the original choices. Cancel 562 also returns the user back to the Main Menu.

Figure 5(d) shows the Connection Menu to dial the number after all the settings are made. Connection 580 is displayed when the user desires to dial the number for E-mail access. Normally this number is provided by the Internet Service Provider (ISP). This number typically is the number of the modem that is connected to a host computer. This host computer acts as a server providing services to a number to client applications. Number Dialed 582 displays the number to be dialed which is entered by the user previously. If the user agrees with the number, he or she starts the dialing by pressing Dial 584. If the number is busy, Number Dialed 582 displays the message "busy". The user may continue to press Dial 584 until the line is connected. Cancel 586 is used when the user wants to cancel the connection and returns back to the Main Menu.

Terminal Emulation Module (TEM):
Figure 6 is a block diagram showing the functions within the TEM 350. TEM 350 consists of essentially three main functions: Display Control 620, Key Entry Control 650, and Communication Control 680.

Display Control 620 consists of functions involving the display of data and information on the monitor. Buffer_Creation 622 creates a buffer to store the characters to be displayed on the monitor window allocated for E-mail Access. Typically the terminal is 80 columns by 25 rows and each character corresponds to one byte of storage. Therefore, the buffer to be created is 80*25 = 2000 bytes long. Linear-to-XY_Conversion 625 converts the linear address of the display buffer into the XY coordinates which correspond to the column and row positions of the character to be displayed. XY-to-Linear_Conversion 626 converts the XY coordinates of the character to the linear address of the display buffer. Screen_Update 627 updates the memory buffer corresponding to the display area on the monitor. Screen_Updates 627 is invoked every time a key is pressed that may have some effect on the display.
Cursor_Tracking 629 obtains the X and Y coordinates of the current character position and other special character modes such as carriage return, line feed.

Key Entry Control 650 consists of functions involving the handling and managing of keyboard entries. The basic functions include LF_Handler 652, Scroll_terminal 654, CR_Handler 656, FF_Handler 658, Clear_Screen 662.

LF_Handler 652 handles the line feed (LF) key. A line feed moves the carriage down one line. This handler essentially scrolls the display one line up and keeps track of the row position. Scroll_Terminal 654 scrolls the display area by removing the first line on the screen and then moving subsequent lines up by one. The last line is usually cleared by a space or a null character. CR_Handler 656 handles the carriage return (CR) key. CR_Handler 656 essentially sets the column coordinate (X coordinate) of the cursor to be zero. FF_Handler 658 handles the Form-Feed character. A form feed advances the current text location to the beginning of the next page. On a terminal, this is equivalent to clearing the screen. FF_Handler 658 therefore invokes Clear_Screen 662. Clear_Screen 662 fills up the screen with a specified character such as the space character, and initializes the XY coordinates to zero. Escape_Handler 664 handles the Escape key. Escape_Handler 664 checks the character entered after the Escape key is pressed to see if the character value is between the "space" and "tilde". If it is, then Escape_Handler 664 invokes Clear_Screen 662 using that character. Character_Handler 666 handles normal key character. Character_Handler 666 puts the key on the screen and moves the text location by one column to prepare for the next character. If the text location moves past the end of the current line, Character_Handler 664 advances the cursor to the beginning of the next line.

Communication Control 680 performs the communication control including the parameter settings and communication protocols. This function includes the interface to the network communication protocols such as Transmission Control Protocol/ Internet Protocol (TCP/IP), Simple Network Management Protocol (SNMP), and HyperText Markup Language (HTML). In addition, this function transfers the property values obtained during initialization or default values to the corresponding values of the settings. The settings of the serial port includes values for baud rate, parity, data bits, and stop bits. BaudRate_Select 682 selects a value from 10 valid baud rates: 300, 1200, 2400, 4800, 7200, 9600, 19200, 38400, 57600, and 115200. Parity_Select 684 selects one of the following parity types: No parity, Even parity, and Odd parity. Databit_Select 686 selects one of the following data sizes: 7 bits and 8 bits. Stopbit_Select 688 selects one of the following two stop bit sizes: 1 bit and 2 bits. In one embodiment, these settings are obtained through internal negotiations between the modem and the processor.

TCP/IP 692 handles the TCP/IP tasks such as flow control, message fragmenting, and message re-assembling. SNMP 694 handles the SNMP management tasks such as database maintenance, query-response management, and trap polling. HTML 696 handles HTML as part of the HyperText Transfer Protocol (HTTP). The HTML provides interface to produce text, graphics, and pointers to other Web pages.

Modem Control Module (MCM):
Figure 7 is a block diagram showing the functions within the MCM 370. MCM 370 controls the modem inside the IRD for sending and receiving data, dialing the telephone number. A majority of these functions have already been implemented in the IRD for Pay-Per-View (PPV) and billing services. MCM 370 consists of four main functions: Serial Interface Control 710, Command_Generator 720, Call_Placing 750, and Hang_Up 790.

Serial Interface Control 710 includes Sending Data 712, Receive Data 714, and Port Settings 716. Sending Data 712 transfers data to modem. Receive Data 714 reads data from modem. Port Settings 716 configures appropriate ports with proper parameters.

Command_Generator 720 generates the appropriate command string to the modem based on an industry standard command set. One example of such industry standard command set is the Hayes AT command set. AT, which stands for "attention", is the basis of the command set used in Hayes modems. An example of a modem-initialization string is:
AT&C1&D2E1V1Q0{CR}

The typical functions of the AT commands are shown below:

| Command | Function |
|---|---|
| &C1 | Tracks true state of carrier detect. |
| &D2 | Hangs up when Data Terminal Ready (DTR) is dropped. |
| DT | Dials a number, using touch tones. |
| E1 | Echoes back what you type. |
| V1 | Responds to commands verbally. |
| Q0 | Responds to commands. |

Call_Placing 750 places the call using the telephone number entered by the user during set-up mode. This telephone number is most likely the number provided by the Internet Service Provider (ISP) for E-mail Access service. To dial a number a command string including the number is sent to the modem. For example, to dial the number 555-1212 using an outside line 9, the command string is ATDT9, 555-1212. Call_Placing 750 may also have to raise the DTR signal before using the modem. Call_Placing 750 invokes Send_Data 712 and Receive_Data 714 functions to send and receive data, respectively.

Hang_up 790 hangs up the line by providing an ON-to-OFF transition in DTR. Hang_Up 790 essentially lowers the DTR line, waits for some time period, and then raises the DTR line high.

Figure 8 shows a typical sequence of an E-mail Access session.

Upon START the system enters the DSS program and service mode (Step 810). If the user desires to switch to the E-mail Access session, he or she presses an appropriate button on the Wireless Controller. It is determined if E-mail Access is desired (Step 812). If NO, control returns back to the DSS program. IF YES, the function E-mail_Access_Entry is invoked (Step 814). The Main Menu is then displayed (Step 816). The function Terminal_Emulation_Linkage is invoked to provide access to the functions encapsulated in the Terminal Emulation Module (TEM) for control the display (Step 820). It is determined if the user desires to exit the Main Menu (Step 822). If so, the function E-mail_Access_Exit is invoked (Step 824) and control returns to DSS program. If not, it is determined if the user desires to enter the Telephone Set-Up mode (Step 830). If not, it is determined if the user enters the Display Set-Up Mode (Step 840). If yes, the corresponding selection is invoked to allow the user to select the proper value for Telephone Entry (Step 835). Similarly, if the Display Set-up is selected, the corresponding selection is invoked to allow the user to select the proper choice for Background Color (Step 841), Foreground Color (Step 842), Cursor Shape (Step 843), and Cursor Blinking (Step 844). If Display Set-Up is not desired, control returns to the Main Menu.

It is determined if Set-up Cancel is desired (Step 850). If not, it is determined if OK is entered (Step 860). If Cancel is entered, the previously stored parameters or choices in non-volatile memory are restored (Step 852) and control returns to the Main Menu. If OK is entered, the selected parameters and choices are stored in the non-volatile memory (Step 862). Otherwise, it is determined if Connection is entered (Step 870). If not, it is determined if Connection Cancel is entered (Step 880). If Connection Cancel is not desired, control returns to Main Menu. Otherwise, Hang_up is invoked to hang up the phone (Step 882) and control returns to Main Menu. If Connection is desired, Command_generator is invoked to send command string to the modem (Step 872). Then Call_Placing is invoked to place the call (Step 874).

It is determined if the line is busy (Step 875). If yes, the busy message is displayed on the Number box (Step 877), and control return to Connection (Step 870). If the line is not busy, it is determined if the connection is made (Step 876). If connection is not made yet, control goes back to check if the line is busy. If connection is established, the communication between the system and the service provider takes place (Step 879).

To have access to the E-mail, the user subscribes to an Internet Service Provider (ISP) which provides a telephone number of a modem connected to a host server. Normally, the ISP will charge a monthly fee depending on the access usage. Some companies provide a fixed monthly fee or per message fee structure. Some companies charge based on the number of access hours. The fee is usually structured such that the user will pay more as he or she receives more capabilities.

While this invention has been described with reference to illustrative embodiments, this description is not intended to be construed in a limiting sense. Various modifications of the illustrative embodiments, as well as other embodiments of the invention, which are apparent to persons skilled in the art to which the invention pertains are deemed to lie within the spirit and scope of the invention.

## Claims

1. A method for providing a user an access to an information network through a telephone line using a direct satellite system (DSS) for providing broadcast programs having an integrated receiver and decoder (IRD) containing a processor, a memory used during a process for providing broadcast programs, a modem used to connect to a broadcast provider to generate billing information, and a display monitor, the method comprising the steps of:
providing a user interface for receiving data entered by the user and displaying information on the display monitor relative to network access;
configuring the processor to emulate the IRD as a terminal; and
controlling the modem for sending and receiving data to and from the information network through the telephone line such that the user can access the information network.

2. The method of Claim 1 wherein the step of providing a.user interface further comprises a step of removing broadcast programs from the display monitor and display information relative to network access to reflect a network access session.

3. The method of Claim 1 wherein the step of providing a user interface further comprises a step of controlling a data entry device for receiving data entered by the user.

4. The method of Claim 2 wherein the step of providing a user interface further comprises a step of displaying an option menu on the display monitor in the network access session.

5. The method of Claim 4 wherein the option menu provides a choice to set up a plurality of settings for the modem and a plurality of display attributes.

6. The method of Claim 4 wherein the option menu provides a choice to use a plurality of default settings for the modem and the terminal.

7. The method of Claim 1 wherein the information network has an electronic mail facility.

8. The method of Claim 1 wherein the step of configuring the processor to emulate the IRD as a terminal further comprises a step of controlling a display of characters on the display monitor.

9. The method of Claim 1 wherein the step of controlling the modem further comprises a step of sending commands to the modem.

10. A direct satellite system (DSS) for providing broadcast programs having an integrated receiver and decoder (IRD), a display monitor, a subsystem for providing a user an access to an information network through a telephone line, comprising:
a processor;
a memory configured to store code which, when executed by the processor, selectively provides broadcast programs or terminal emulation to access the information network;
a modem configured to selectively access a DSS service provider or a network access service provider; and
an input device configured to enable the user to select between broadcast programs and the access to the information network.

11. The system of Claim 10 wherein the information network has an electronic mail facility.
